# EUROPÄISCHE PATENTSCHRIFT

(11) **EP 1 906 742 B1**
(45) Veröffentlichungstag und Bekanntmachung des Hinweises auf die Patenterteilung: **01.04.2015**
(21) Anmeldenummer: 06762414.8
(22) Anmeldetag: 05.07.2006
(51) Int. Cl.: A22C 13/00

(54) **NAHRUNGSMITTELHÜLLE AUF BASIS VON CELLULOSEHYDRAT MIT EINER KOLLAGEN-FIBRILLEN UND GELATINE ENTHALTENDEN BESCHICHTUNG**
FOOD CASING BASED ON CELLULOSE HYDRATE WITH A COATING CONTAINING COLLAGEN FIBRILS AND GELATIN
GAINE POUR PRODUITS ALIMENTAIRES A BASE D'HYDRATE DE CELLULOSE, POURVUE D'UN REVETEMENT CONTENANT DES FIBRILLES DE COLLAGENE

(30) Priorität: 09.07.2005 DE 102005032241
(43) Veröffentlichungstag der Anmeldung: 09.04.2008
(73) Patentinhaber: Kalle GmbH, 65203 Wiesbaden (DE)
(72) Erfinder: HAMMER, Klaus-Dieter, 55120 Mainz (DE); GORD, Herbert, 55218 Ingelheim (DE); GROLIG, Gerhard, 64546 Mörfelden-Walldorf (DE); LUTZ, Walter, 55257 Budenheim (DE)
(74) Vertreter: Plate, Jürgen
(86) Internationale Anmeldenummer: PCT/EP2006/006547
(87) Internationale Veröffentlichungsnummer: WO 2007/006464

(56) Entgegenhaltungen:
- EP-A- 0 914 772
- DE-A1- 4 123 745
- GB-A- 1 544 155

## Beschreibung

Die Erfindung betrifft eine ein- und/oder beidseitig beschichtete Nahrungsmittelhülle auf Basis von Cellulosehydrat, ein Verfahren zu deren Herstellung sowie ihre Verwendung als künstliche Wursthülle.

Hautfaserdärme bestehen aus gehärtetem Bindegewebseiweiß (Kollagen). Sie sind besonders gut geeignet als Umhüllung für Dauerwurst, wie Salami. Die Dauerwurst kann in einer solchen Hülle in idealer Weise reifen. Zugleich haftet die Hülle gut am Dauerwurstbrät. Bei Dauerwurstsorten, die mit Edelschimmel gereift werden, verbindet sich der Schimmel fest mit der Hülle. Die Hülle ist zudem resistent gegen cellulytische Enzyme (Cellulasen), die unter ungünstigen Reifebedingungen vom Schimmel gebildet werden können. Die Herstellung der Hautfaserdärme ist jedoch sehr aufwendig und dementsprechend teuer. Als Ausgangsmaterial dient der bei der Lederherstellung aus Rinderhäuten anfallende sogenannte Haut-spalt. Dieser wird sauer aufgeschlossen und zerkleinert bis zur Stufe der Hautfaserfibrillen. Die Fibrillen können bis zu etwa 30 µm dick und bis zu etwa 40 mm lang sein. Der daraus gebildeten Fibrillen-Faserbrei wird dann extrudiert und gehärtet, beispielsweise durch Behandeln mit NH₃. Nachteilig an den Hautfaserdärmen ist deren relativ geringe mechanische Festigkeit. Beim Füllen mit dem Wurstbrät platzen sie leicht. Auch läßt sich der Durchmesser der Hautfaserdärme nicht immer konstant halten (mangelnde Kaliberkonstanz). Schließlich haben die zum Verschließen der gefüllten Wursthüllen verwendeten Clips keinen besonders festen Sitz.

Cellulose-Faserdärme zeigen demgegenüber sehr gute mechanische Eigenschaften, werden jedoch von Cellulasen angegriffen. Um die Cellulaseresistenz zu erhöhen, wurden verschiedene Beschichtungen entwickelt. Praktisch resistent gegen einen Cellulase-Angriff sind jedoch Cellulose-Faserdärme, die mit einem Überzug aus Polymeren auf Basis von hydrophilen Vinylmonomeren versehen sind (DE-A 32 27 920). Daneben wurde ein Überzug aus Casein, das mit Glyoxal vernetzt ist, vorgeschlagen (DE 36 06 195). Bekannt sind auch Cellulose-Faserdärme mit einer Beschichtung auf der Außenseite, die ein wasserunlösliches kationisches Harz und zusätzlich Partikel oder Fasern aus Kunststoff oder Cellulose umfaßt (DE-A 37 13 712). Cellulose-Faserdärme, die vermischt mit dem Cellulosehydrat, Vinylpyrrolidon-homo- oder -copolymere enthalten, zeigen ebenfalls eine verminderte Anfälligkeit gegen cellulytisch wirkende Enzyme (DE-A 102 51 200). Auch im Reifeverhalten sind die Cellulose-Faserdärme den Hautfaserdärmen unterlegen. Im Vergleich mit Hautfaserdärmen weisen sie viel höhere Permeationswerte auf. Für eine Schimmelreifung sind Cellulosehydrat-Faserdärme ebenfalls nicht besonders gut geeignet.

Es bestand daher nach wie vor die Aufgabe, eine besonders für Dauerwurst geeignete Hülle zu entwickeln, die die Vorteile der Hautfaserdärme mit denen der Cellulose-Faserdärme vereint, die Nachteile jedoch vermeidet. Insbesondere soll die Hülle resistent sein gegen cellulytisch wirkende Enzyme, die von Schimmelpilzen bei der Herstellung von schimmelgereiften Dauerwürsten produziert werden können. Sie soll zudem kaliberkonstant sein. Zum Verschließen dienende Kunststoff- oder Metallclips sollen einen sicheren Halt zeigen und nicht abrutschen. Die Hülle soll zudem möglichst einfach herzustellen sein.

Gelöst wurde die Aufgabe mit einer Beschichtung, die Kollagenfibrillen und mindestens eine hochmolekulare Gelatine enthält, die beide vernetzt werden.

Gegenstand der vorliegenden Erfindung ist demgemäß eine ein- und/oder beidseitig beschichtete Nahrungsmittelhülle auf Basis von Cellulosehydrat, die dadurch gekennzeichnet ist, daß die Beschichtung vernetzte Kollagenfibrillen und mindestens eine ebenfalls vernetzte, hochmolekulare Gelatine umfaßt. Die hochmolekulare Gelatine weist vor dem Vernetzen bevorzugt eine Bloomzahl von weniger als 320, besonders bevorzugt von 260 bis 310, auf.

Die Nahrungsmittelhülle weist vorzugsweise eine Faserverstärkung auf, die insbesondere aus einem naßfesten Faserpapier besteht, beispielsweise ein mit Viskose und/oder einem synthetischen Harz gebundenes Hanffaserpapier. Die Faserverstärkung hat allgemein ein Gewicht von 15 bis 28 g/m², bevorzugt von 17 bis 25 g/m².

Ist die Nahrungsmittelhülle als künstliche Wursthülle vorgesehen, dann ist sie zweckmäßig schlauchförmig ausgebildet. Bei der Herstellung einer faserverstärkten Wursthülle wird die Faserverstärkung dabei zunächst zu einem Schlauch mit überlappenden Längskanten geformt, der dann mit Hilfe einer Ringdüse innen und/oder außen beispielsweise mit Viskose oder einer in wasserhaltigem N-Methyl-morpholin-N-oxid (NMMO) gelösten Cellulose beschichtet wird. Nach dem Regenerieren bzw. Fällen der Cellulose wird auf diese Weise eine praktisch nahtlos erscheinende Hülle erhalten. Um die Eigenschaften der Hülle zu modifizieren, können der Viskose bzw. der NMMO/Cellulose-Lösung Additive zugesetzt werden. Das sind beispielsweise Alginsäure und/oder Alginate, Fettamine, Fett-alkohole oder deren Ethoxylate, Fettsäuresalze, Copolymere mit Vinyl-pyrrolidon-Einheiten und (Meth)acrylsäure-alkylester-Einheiten, wobei der Alkylrest primäre, sekundäre oder tertiäre Aminogruppen oder Trialkyl-ammonium-Gruppen aufweist (EP-A 0 638 241). Copolymere mitt Einheiten von Vinylpyrrolidon und von Ethyl-(2-methacryloyloxy-ethyl)-dimethyl-ammonium-ethylsulfat sind beispielsweise unter der Bezeichnung ®Gafquat 755 N erhältlich. Durch solche Additive läßt sich die Permeation der Hüllen vermindern, wodurch sie den Hautfaserdärmen ähnlicher werden. Zahlreiche der genannten Additive wirken zudem als permanent weichmachende, nicht auswaschbare Weichmacher (sogenannte primäre Weichmacher).

Um die Kollagen-Fibrillen und die wasserlösliche Gelatine zu vernetzen werden zweckmäßig niedermolekulare, organische Verwindungen mit zwei oder mehr reaktionsfähigen Gruppen eingesetzt. Die Gruppen sollten so gewählt sein, daß bei der Reaktion kovalente Bindungen zwischen den Kollagenfibrillen untereinander, zwischen den Kollagen-Fibrillen und der Gelatine sowie auch zwischen den Kollagen-Fibrillen oder der Gelatine und der regenerierten Cellulose entstehen. Bevorzugte Vernetzer dieser Art sind Dialdehyde, insbesondere Glyoxal, Glutardialdehyd, Bernsteinsäuredialdehyd, Zuckerdialdehyde, epoxidierte Leinöle (die gleichzeitig weichmachende Wirkung zeigen), Dialkylketene (erhältlich beispielsweise unter der Bezeichnung®Aquapel), Citral oder Tannin. Eine Vernetzung der Gelatine kann auch mit Transglutaminasen erreicht werden. Prinzipiell kann die Vernetzung auch auf andere Weise erreicht werden, beispielsweise durch Behandeln mit energiereicher Strahlung.

In einer bevorzugten Ausführungsform beträgt das Gewichtsverhältnis von hochmolekularer Gelatine zu den Kollagenfibrillen 90 : 10 bis 30 : 80. Bevorzugt ist ein Verhältnis von etwa 80 : 20.

Der Anteil an Vernetzer(n) beträgt vorzugsweise 2 bis 20 Gew.-%, besonders bevorzugt 3 bis 16 Gew.-%, speziell 5 bis 10 Gew.-%, jeweils bezogen auf das Gesamtgewicht von Kollagenfibrillen und Gelatine. Besonders bevorzugt ist die Kombination von etwa 5 bis 7 Gew.-% Glyoxal und 3 bis 5 Gew.-% epoxidiertem Leinöl.

Die erfindungsgemäße Nahrungsmittelhülle weist auf einer Seite oder beiden Seiten eine Schicht auf, die vernetzte Kollagen-Fibrilien enthält.

Eine auf der dem Nahrungsmittel zugewandten Seite befindliche Beschichtung weist zweckmäßig ein Gewicht von 80 bis 200 mg/m² auf. In speziellen Ausführungsformen kann das Schichtgewicht auch bei 1.000 bis 20.000 mg/m², bevorzugt 1.000 bis 5.000 mg/m², liegen, entsprechend einer Schichtdicke von 1 bis 20 µm, bevorzugt 1 bis 5 µm. Die Affinität zum Brät läßt sich dabei durch Ändern des Verhältnisses von Kollagen-Fibrillen zu Gelatine variieren. Mit zunehmendem Fibrillen-Anteil wird die innere Oberfläche rauher, was ebenfalls die Haftung der Hülle am Brät beeinflußt. Die erfindungsgemäße Hülle weist eine besonders hohe Affinität zum Brät auf, wie sie für langlebige Dauerwursttypen erwünscht ist. Eine Schicht, die sich auf der dem Nahrungsmittel abgewandte Seite befindet, hat zweckmäßig ein Schichtgewicht von 80 bis 20.000 mg/m², bevorzugt 150 bis 7.000 mg/m², besonders bevorzugt 250 bis 5.000 mg/m². Bei diesen dickeren Außenschichten liegt das Gewichtsverhältnis von Gelatine zu Fibrillen zweckmäßig im Bereich von 60 : 40 bis 50 : 50. Der Hautfaserdarm-Charakter auf der Außenseite läßt sich ebenfalls durch gezieltes Einstellen des Verhältnisses von Fibrillen zu Gelatine wie auch durch die Schichtdicke steuern. Je dicker die äußere Beschichtung ausgeführt wird, um so geschmeidiger und besser vernetzt sollte sie sein. Mit der Dicke der auf der Außenseite befindlichen Schicht nimmt die Cellulase-Resistenz zu gleichzeitig vermindert sich die Permeation. Mit steigender Schichtdicke nähert sich die Permeation der von Hautfaserdärmen an. Diese haben eine Permeation von 10 bis 12 l/m² bei 40 bar. Hüllen mit einer dicken Außenschicht eignen sich besonders gut als künstliche Wursthüllen für schimmelgereifte Dauerwurst. Die Bildung von unerwünschten Trockenrändern beim Reifen der Wurst tritt bei der erfindungsgemäßen Hülle praktisch nicht mehr auf.

Insbesondere bei dickeren Beschichtungen hat es sich als vorteilhaft erwiesen, die Fibrillen/Gelatine-Masse mit weichmachenden Kunststoff-Dispersionen abzumischen, beispielsweise mit einer Acrylat-Polymer (beispielsweise Butylacrylat-Polymer-), Synthesekautschuk- oder einer Polystyrol-Dispersion. Die Kunststoff-Dispersionen bewirken nicht nur eine bessere Geschmeidigkeit der Hülle, sondern verringern auch noch die Löslichkeit der Beschichtung insgesamt. Der Anteil dieser Kunststoffe beträgt allgemein etwa 20 bis 60 Gew.-%, bevorzugt etwa 30 bis 50 Gew.-%, bezogen auf das Gesamtgewicht von Gelatine und Fibrillen.

Die erfindungsgemäße Nahrungsmittelhülle kann daneben einen auswaschbaren (sekundären") Weichmacher enthalten, bevorzugt Glycerin.

Die erfindungsgemäße Nahrungsmittelhülle verbindet die vorteilhaften Eigenschaften eines Cellulose-Faserdarms (insbesondere dessen hohe Festigkeit) mit den Vorteilen eines Hautfaserdarms (insbesondere die geringe Permeation). Durch entsprechende Wahl des Verhältnisses von Gelatine zu Kollagen-Fibrillen und der Schichtdicke lassen sich Hüllen für die verschiedensten Nahrungsmittel bereitstellen.

Ein weiterer Gegenstand der vorliegenden Erfindung ist ein Verfahren zur Herstellung der Nahrungsmittelhülle. In dem Verfahren wird eine Hülle auf Basis von Cellulosehydrat, die sich noch im Gelzustand befindet, mit einer wäßrigen Zusammensetzung beschichtet, die Kollagenfibrillen und mindestens eine hochmolekulare Gelatine enthält, und anschließend getrocknet. Vorzugsweise enthält die Zusammensetzung noch mindestens einen Vernetzer, bevorzugt Glyoxal. Vor dem Beschichten kann die Hülle ein Bad durchlaufen, das einen sekundären Weichmacher, bevorzugt Glycerin, enthält. Die in der Regel schlauchförmige Hülle wird zweckmäßig im flachgelegten Zustand beschichtet. Aufgetragen wird das Kollagen-fibrillen und Gelatine umfassende Gemisch mit Vorrichtungen, die dem Fachmann an sich bekannt sind, beispielsweise durch Rakelantrag. Die Vernetzung tritt allgemein beim Trocknen ein.

Verwendet wird die erfindungsgemäße Nahrungsmittelhülle insbesondere als künstliche Wursthülle, bevorzugt für Rohwurst, daneben auch für Brühwurst. Die beschichtete Oberfläche hat dabei praktisch die gleichen Eigenschaften wie ein Hautfaserdarm. Mit besonderem Vorteil eingesetzt werden kann die erfindungsgemäße Hülle für schimmelgereifte Rohwurst. Der dabei eingesetzte Edelschimmel erzeugt unter ungünstigen Reifebedingungen cellulytisch wirkende Enzyme (Cellulasen). Bei nicht beschichteten Hüllen können die Cellulasen die regenerierte Cellulose schädigen. Das kann so weit gehen, daß die Hülle weitgehend zerstört wird und die Reste der Hülle noch schwer von dem Wurstbrät entfernt werden können. Durch die Beschichtung mit den Kollagen-Fibrillen wird dieser Effekt überraschenderweise vollständig unterdrückt. Durch die Beschichtung wird zudem die Wasserdurchlässigkeit der Nahrungsmittelhüllen, d.h. die Permeation, vermindert. Durch die hohe Bräthaftung der erfindungsgemäßen Hülle ist es möglich, eine Brühwurst in Scheiben zu schneiden, ohne daß dabei die am Umfang der einzelnen Scheiben haftenden Hüllenreste abgeschoben werden.

Die nachfolgenden Beispiele dienen zur Illustration der Erfindung. Prozente sind darin Gewichtsprozente, soweit nicht anders angegeben oder aus dem Zusammenhang ersichtlich. Gt steht für Gewichtsteil(e). Das Kaliber bezeichnet den Innendurchmesser der schlauchförmigen Hülle in Millimetern.

### Beispiel 1

Ein doppelviskosierter Cellulose-Geldarm vom Kaliber 60 mit einer innenliegenden Verstärkung aus einem naßfest gebundenen Hanffaserpapier (Viskoseverteilung: 40 % außen, 60 % innen) wurde nach dem Verlassen der Glycerinkufe durch ein Walzenantragswerk gefahren, mit dem auf die Außenseite eine wäßrige Dispersion aufgetragen wurde. Die Dispersion enthielt 3 % einer Mischung aus
80 Gt Gelatine (Bloomzahl 280),
20 Gt Kollagenfibrillen und
5 Gt Glyoxal als Vernetzer.

Die gleiche Dispersion wurde in das Innere des Gelschlauchs eingebracht, bevor dieser in den Trockner einlief, um die innere Oberfläche zu beschichten ("slug coating"). Der Schlauch wurde dann wie üblich zwischen 2 Quetschwalzenpaaren im aufgeblasenen Zustand mit Heißluft getrocknet und aufgewickelt. Das Gewicht der vernetzten "Gelatine/Fibrillen-Schicht lag auf der Innenseite bei 100 mg/m², auf der Außenseite bei 160 mg/m².

Der Schlauch wurde dann gerafft, mit Dauerwurstbrät gefüllt und mehrere Monate lang schimmelgereift. Der Schimmelbewuchs war gleichmäßig und fest. Die Hülle haftete auch nach der Reifung noch fest an der Brät-oberfläche. Der Celluloseanteil der Hülle wies trotz der langen Reifung keinerlei Schädigungen auf, die auf cellulytisch wirkende Enzyme (Cellulasen) zurückgeführt werden könnten. Die Schälbarkeit der Hülle nachdem Reifen wurde mit "3" beurteilt (Maßstab von 1 bis 5, wobei 1 eine extrem leichte Schälbarkeit bedeutet und 5, daß sich die Hülle nicht mehr zerstörungsfrei abziehen läßt).

### Beispiel 2

Ein Cellulosehydrat-Gel-Darm vom Kaliber 60 mit einer innenliegenden Verstärkung aus einem naßfest gebundenen Hanffaserpapier, der durch einen Gehalt an Alginat und Calciumstearat modifiziert und damit permanent weichgemacht war (wie im Beispiel 1 der EP-A 0 638 241 offenbart) und daher ohne Glycerin auskam, wurde auf der Außenseite mit Hilfe eines Walzenantragswerks mit einer 50 %igen wäßrigen Dispersion beschichtet. Der nicht-wäßrige Anteil der Dispersion bestand aus
60 Gt Gelatine (Bloomzahl 280),
40 Gt Kollagen-Fibrillen,
5 Gt Glyoxal und
8 Gt epoxidiertem Leinöl.

Das Antragswerk war so eingestellt, daß die kellagenhaltige Beschichtung nach dem Trocknen eine Dicke von 5 µm hatte. Der Schlauch wurde dann wie üblich zwischen 2 Quetschwalzenpaaren im aufgeblasenen Zustand mit Heißluft getrocknet. Dabei fand eine Vernetzung der kollagenhaltigen Schicht statt und die Schicht verband sich fest mit Cellulosehydrat-Oberfläche.

Die auf diese Weise hergestellten Faserdärme zeigten eine Permeation von 25 l/m²·d bei 40 bar Druck. Die Därme wurden mit Dauerwurstbrät gefüllt und schimmelgereift. Der Schimmel wuchs langsam und bildete einen kurzen und gleichmäßigen Pilzrasen, der sehr fest haftete. Eine durch Cellulasen hervorgerufene Schädigung des Cellulosehydratmaterials wurde auch unter ungünstigen Reifebedingungen in keinem Fall beobachtet. Die Oberflächeneigenschaften der Hülle glichen damit weitgehend denen eines Hautfaserdarms.

### Beispiel 3

Ein Cellulosehydrat-Gel-Darm mit einer innenliegenden Verstärkung aus einem naßfest gebundenen Hanffaserpapier mit einer verminderter Viskosemenge gemäß DE-A 195 10 883, wurde nach dem Verlassen der Glycerinkufe im flachgelegten Zustand mit Hilfe eines Rakels mit einer 20%igen wäßrigen Dispersion beschichtet. Der Nicht-Wasser-Anteil bestand aus
50 Gt Gelatine,
50 Gt Kollagen-Fibrillen,
5 Gt Glyoxal als Vernetzer,
10 Gt epoxidiertes Leinöl (®Edenol) und
30 Gt dispergiertem Acrylat (eingesetzt wurde eine wäßrige Acrylat-Dispersion).

Die Mischung wurde in einer solchen Menge aufgerakelt, daß die Beschichtung nach dem Trocknen eine Dicke von 20 µm aufwies.

Die so hergestellte Wursthülle wies eine Permeation von 18 l/m²·d bei 40 bar auf. Gegenüber einer nicht-beschichteten Hülle war die Permeation damit deutlich vermindert.

Die Hülle wurde wie in den Beispielen 1 und 2 beschrieben mit Dauerwurstbrät gefüllt und schimmelgereift. Reifeverlauf, Schimmelwachstum und Cellulase-Resistenz waren sehr gut. Auch unter ungünstigen Reifebedingungen bildete sich kein Trockenrand.

## Patentansprüche

1. Ein- oder beidseitig beschichtete Nahrungsmittelhülle auf Basis von Cellulosehydrat, **dadurch gekennzeichnet, daß** die Beschichtung vernetzte Kollagenfibrillen und mindestens eine vernetzte, hochmolekulare Gelatine umfaßt.

2. Nahrungsmittelhülle gemäß Anspruch 1, **dadurch gekennzeichnet, daß** die mindestens eine hochmolekulare Gelatine vor dem Vernetzen eine Bloomzahl von 260 bis 320 aufweist.

3. Nahrungsmittelhülle gemäß Anspruch 1 oder 2, **dadurch gekennzeichnet, daß** die Beschichtung mindestens einen Vernetzer umfaßt.

4. Nahrungsmittelhülle gemäß einem oder mehreren der Ansprüche 1 bis 3, **dadurch gekennzeichnet, daß** sie eine Faserverstärkung aufweist, wobei die Faserverstärkung bevorzugt aus einem naßfesten Faserpapier, insbesondere einem Hanffaserpapier, besteht.

5. Nahrungsmittelhülle gemäß einem oder mehreren der Ansprüche 1 bis 4, **dadurch gekennzeichnet, daß** sie schlauchförmig ist.

6. Nahrungsmittelhülle gemäß einem oder mehreren der Ansprüche 3 und 4 bis 5 wenn auf 3 rückbezgen, **dadurch gekennzeichnet, daß** der Vernetzer ein Dialdehyd ist, bevorzugt Glyoxal, Glutardialdehyd, Bernsteinsäuredialdehyd, ein Zuckerdialdehyd oder epoxidiertes Leinöl.

7. Nahrungsmittelhülle gemäß einem oder mehreren der Ansprüche 1 bis 6, **dadurch gekennzeichnet, daß** das Gewichtsverhältnis hochmolekularer Gelatine zu den Kollagenfibrillen 90 : 10 bis 30 : 80 beträgt.

8. Nahrungsmittelhülle gemäß einem oder mehreren der Ansprüche 1 bis 7, **dadurch gekennzeichnet, daß** der Anteil an Vernetzer(n) 2 bis 20 Gew.-%, bevorzugt 3 bis 16 Gew.-%, besonders bevorzugt 5 bis 10 Gew.-%, beträgt, jeweils bezogen auf das Gesamtgewicht von Kollagenfibrillen und Gelatine.

9. Nahrungsmittelhülle gemäß einem oder mehreren der Ansprüche 1 bis 8, **dadurch gekennzeichnet, daß** die dem Nahrungsmittel zugewandte Seite beschichtet ist und ein Schichtgewicht von 80 bis 200 mg/m² aufweist.

10. Nahrungsmittelhülle gemäß einem oder mehreren der Ansprüche 1 bis 9, **dadurch gekennzeichnet, daß** die dem Nahrungsmittel abgewandte Seite beschichtet ist und ein Schichtgewicht von 80 bis 20.000 mg/m², bevorzugt 150 bis 7.000 mg/m², besonders bevorzugt 250 bis 5.000 mg/m².

11. Nahrungsmittelhülle gemäß Anspruch 10, **dadurch gekennzeichnet, daß** die Beschichtung mit einer weichmachenden Kunststoffdispersion abgemischt ist, bevorzugt mit einer Acrylat-, Synthesekautschuk- oder einer Polystyrol-Dispersion.

12. Nahrungsmittelhülle gemäß einem Anspruch 11, **dadurch gekennzeichnet, daß** sie einen sekundären Weichmacher enthält, bevorzugt Glycerin.

13. Verfahren zur Herstellung einer Nahrungsmittelhülle gemäß einem oder mehreren der Ansprüche 1 bis 12, **dadurch gekennzeichnet, daß** eine Hülle auf Basis von Cellulosehydrat, die sich noch im Gelzustand befindet, mit einer wäßrigen Zusammensetzung beschichtet wird, die Kollagenfibrillen enthält, die dann untereinander und mit dem Cellulosehydrat vernetzt werden, und die Hülle getrocknet wird.

14. Verfahren gemäß Anspruch 13, **dadurch gekennzeichnet, daß** der wäßrigen Zusammensetzung mindestens eine hochmolekulare Gelatine hinzugefügt wird.

15. Verfahren gemäß Anspruch 13, **dadurch gekennzeichnet, daß** die Hülle vor dem Beschichten durch ein Bad geführt wird, das einen sekundären Weichmacher, bevorzugt Glycerin, enthält.

16. Verfahren gemäß Anspruch 13 oder 14, **dadurch gekennzeichnet, daß** die Hülle schlauchförmig ist und im flachgelegten Zustand beschichtet wird.

17. Verfahren gemäß einem oder mehreren der Ansprüche 13 bis 15, **dadurch gekennzeichnet, daß** das Kollagenfibrillen und Gelatine umfassende Gemisch durch Rakelantrag aufgebracht wird.

18. Verwendung der Nahrungsmittelhülle gemäß einem oder mehreren der Ansprüche 1 bis 12 als künstliche Wursthülle, bevorzugt für Rohwurst.

## Claims

1. A food casing coated on one or both sides and based on cellulose hydrate, wherein the coating encompasses crosslinked collagen fibrils and at least one crosslinked, high-molecular-weight gelatin.

2. The food casing as claimed in claim 1, wherein the at least one high-molecular-weight gelatin has, prior to crosslinking, a Bloom number from 260 to 320.

3. The food casing as claimed in claim 1 or 2, wherein the coating encompasses at least one crosslinking agent.

4. The food casing as claimed in one or more of claims 1 to 3, which has fiber reinforcement, where the fiber reinforcement is preferably composed of a fiber paper with wet strength, in particular of a hemp fiber paper.

5. The food casing as claimed in one or more of claims 1 to 4, which is tubular.

6. The food casing as claimed in one or more of claims 3 and 4 to 5 if related to claim 3, wherein the crosslinking agent is a dialdehyde, preferably glyoxal, glutaraldehyde, succinaldehyde, a sugar dialdehyde, or epoxidized linseed oil.

7. The food casing as claimed in one or more of claims 1 to 6, wherein the ratio by weight of high-molecular-weight gelatin to the collagen fibrils is from 90 : 10 to 30 : 80.

8. The food casing as claimed in one of more of claims 1 to 7, wherein the proportion of crosslinking agent(s) is from 2 to 20 % by weight, preferably from 3 to 16 % by weight, particularly preferably from 5 to 10 % by weight, based in each case on the total weight of collagen fibrils and gelatin.

9. The food casing as claimed in one or more of claims 1 to 8, wherein the side facing toward the food has been coated and has a coating weight of from 80 to 200 mg/m².

10. The food casing as claimed in one or more of claims 1 to 9, wherein the side facing away from the food has been coated, and has a coating weight of from 80 to 20 000 mg/m², preferably from 150 to 7000 mg/m², particularly preferably from 250 to 5000 mg/m².

11. The food casing as claimed in claim 10, wherein the coating has been blended with a plasticizing synthetic polymer dispersion, preferably with an acrylate dispersion, synthetic rubber dispersion, or polystyrene dispersion.

12. The food casing as claimed in claim 11, which comprises a secondary plasticizer, preferably glycerol.

13. A process for the production of a food casing as claimed in one or more of claims 1 to 12, which comprises using an aqueous composition to coat a casing which is based on cellulose hydrate and which is still in the gel state, where the aqueous composition comprises collagen fibrils which are then crosslinked with one another and with the cellulose hydrate, and then drying the casing.

14. The process as claimed in claim 13, wherein at least one high-molecular-weight gelatin is added to the aqueous composition.

15. The process as claimed in claim 13, wherein the casing is passed, prior to the coating process, through a bath which comprises a secondary plasticizer, preferably glycerol.

16. The process as claimed in claim 13 or 14, wherein the casing is tubular and is coated in the collapsed state.

17. The process as claimed in one or more of claims 13 to 15, wherein the mixture encompassing collagen fibrils and encompassing gelatin is applied by doctor-application.

18. The use of the food casing as claimed in one or more of claims 1 to 12 as synthetic sausage casing, preferably for raw sausage.

## Revendications

1. Enveloppe pour aliment, enduite d'un côté ou des deux côtés, à base d'hydrate de cellulose, **caractérisée en ce que** l'enduit comprend des fibrilles de collagène réticulées et au moins une gélatine macromoléculaire réticulée.

2. Enveloppe pour aliment selon la revendication 1, **caractérisée en ce que** l'au moins une gélatine macromoléculaire présente, avant la réticulation, un indice de Bloom de 260 à 320.

3. Enveloppe pour aliment selon la revendication 1 ou 2, **caractérisée en ce que** l'enduit comprend au moins un agent de réticulation.

4. Enveloppe pour aliment selon l'une ou plusieurs des revendications 1 à 3, **caractérisée en ce qu'**elle comporte un renfort de fibres, le renfort de fibres étant constitué de préférence d'un papier de fibres résistant à l'état humide, notamment d'un papier de fibres de chanvre.

5. Enveloppe pour aliment selon l'une ou plusieurs des revendications 1 à 4, **caractérisée en ce qu'**elle est tubulaire.

6. Enveloppe pour aliment selon l'une ou plusieurs des revendications 3 ainsi que 4 et 5 quand elles se rapportent à la revendication 3, **caractérisée en ce que** l'agent de réticulation est un dialdéhyde, de préférence du glyoxal, du glutardialdéhyde, du dialdéhyde d'acide de Bernstein, un dialdéhyde de sucre ou de l'huile de lin époxydée.

7. Enveloppe pour aliment selon l'une ou plusieurs des revendications 1 à 6, **caractérisée en ce que** le rapport pondéral de la gélatine macromoléculaire aux fibrilles de collagène est de 90:10 à 30:80.

8. Enveloppe pour aliment selon l'une ou plusieurs des revendications 1 à 7, **caractérisée en ce que** la part d'agent(s) de réticulation est de 2 à 20 % en poids, de préférence de 3 à 16 % en poids, notamment de préférence de 5 à 10 % en poids, à chaque fois par rapport au poids total des fibrilles de collagène et de la gélatine.

9. Enveloppe pour aliment selon l'une ou plusieurs des revendications 1 à 8, **caractérisée en ce que** le côté proche de l'aliment est enduit et présente un poids d'enduit de 80 à 200 mg/m².

10. Enveloppe pour aliment selon l'une ou plusieurs des revendications 1 à 9, **caractérisée en ce que** le côté éloigné de l'aliment est enduit et présente un poids d'enduit de 80 à 20 000 mg/m², de préférence de 150 à 7 000 mg/m², notamment de préférence de 250 à 5 000 mg/m².

11. Enveloppe pour aliment selon la revendication 10, **caractérisée en ce que** l'enduit est mélangé à une dispersion de plastique assouplissante, de préférence à une dispersion d'acrylate, à une dispersion de caoutchouc synthétique ou à une dispersion de polystyrène.

12. Enveloppe pour aliment selon la revendication 11, **caractérisée en ce qu'**elle contient un assouplissant secondaire, de préférence de la glycérine.

13. Procédé de fabrication d'une enveloppe pour aliment selon l'une ou plusieurs des revendications 1 à 12, **caractérisé en ce qu'**une enveloppe à base d'hydrate de cellulose qui se trouve encore à l'état de gel est enduite d'un composé aqueux qui contient des fibrilles de collagène qui sont ensuite réticulées entre elles et avec l'hydrate de cellulose et **en ce que** l'enveloppe est séchée.

14. Procédé selon la revendication 13, **caractérisé en ce qu'**au moins une gélatine macromoléculaire est ajoutée au composé aqueux.

15. Procédé selon la revendication 13, **caractérisé en ce que**, avant l'enduction, l'enveloppe est passée dans un bain qui contient un assouplissant secondaire, de préférence de la glycérine.

16. Procédé selon la revendication 13 ou 14, **caractérisé en ce que** l'enveloppe est tubulaire et enduite à l'état plat.

17. Procédé selon l'une ou plusieurs des revendications 13 à 15, **caractérisé en ce que** le mélange comprenant des fibrilles de collagène et de la gélatine est appliqué par enduction à la racle.

18. Utilisation de l'enveloppe pour aliment selon l'une ou plusieurs des revendications 1 à 12 comme boyau synthétique, de préférence pour du saucisson sec ou de la saucisse sèche.
